# FASCICULE DE BREVET EUROPEEN

(11) **EP 3 097 618 B1**
(45) Date de publication et mention de la délivrance du brevet: **28.03.2018**
(21) Numéro de dépôt: 15701177.6
(22) Date de dépôt: 21.01.2015
(51) Int. Cl.: H02B 13/045, H01H 33/56

(54) **ÉLÉMENT DE CUVE D'UN APPAREILLAGE DE COUPURE OU D'ISOLEMENT D'UN CIRCUIT, CUVE D'UN TEL APPAREILLAGE ET PROCÉDÉ DE FABRICATION D'UNE TELLE CUVE**
BEHÄLTERTEIL FÜR EIN SCHALTGERÄT, BEHÄLTER FÜR SOLCH EIN SCHALTGERÄT UND HERSTELLUNGSVERFAHREN VON SOLCH EINEM BEHÀLTER
CASING PART OF A SWITCHGEAR, CASING OF SUCH A SWITCHGEAR AND MANUFACTURING PROCESS OF SUCH A CASING.

(30) Priorité: 21.01.2014 FR 1450462
(43) Date de publication de la demande: 30.11.2016
(73) Titulaire: General Electric Technology GmbH, 5400 Baden (CH)
(72) Inventeur: SERAIN, Mathias, F-73190 Saint Baldoph (FR); CAVALLIER, Clément, F-74370 Epagny Metz-Tessy (FR); DE-BRITO, Luis, F-74940 Annecy-le-Vieux (FR); BARBE, Tommy, F-73100 Aix les Bains (FR)
(74) Mandataire: Cleary, Fidelma
(86) Numéro de dépôt international: PCT/EP2015/051155
(87) Numéro de publication internationale: WO 2015/110479

(56) Documents cités:
- EP-A1- 0 094 858
- DE-A1- 19 502 061
- FR-A1- 2 369 672
- JP-A- H06 197 423
- JP-A- 2011 229 195
- US-A1- 2012 113 568

## Description

### DESCRIPTION

### DOMAINE TECHNIQUE

L'invention se rapporte au domaine des appareillages de coupure ou d'isolement de circuit à hautes tensions multi-phases qui sont du type appareillages isolés par fluide diélectrique.

### ÉTAT DE LA TECHNIQUE ANTÉRIEURE

La conception de cuve d'appareillage de coupure de d'isolement de circuit électrique multi-phase, c'est-à-dire comportant au moins deux phases, tel qu'un sectionneur multi-phases, pour les appareillages isolés par un fluide diélectrique, est relativement complexe. Ceci est vrai quel que soit le type de la cuve d'appareillage, que celle-ci soit une cuve de sectionneur standard, de sectionneur de mise à la terre, de disjoncteur-sectionneur ou encore d'éclisse de maintenance.

En effet, ces appareillages permettent de séparer physiquement un circuit à haute tension du réseau d'alimentation l'alimentant, ceci pour sécuriser l'intervention d'un opérateur sur ce même circuit. Cette séparation doit être réalisée concomitamment sur l'ensemble des phases du réseau d'alimentation.

Afin d'autoriser cette séparation simultanée, une telle cuve est généralement composée de plusieurs éléments de cuve indépendants les uns des autres et correspondants chacun à une phase du réseau d'alimentation. Chaque élément de cuve comporte un conducteur mobile entre une première position dans laquelle le conducteur conduit le courant de ladite phase entre le réseau d'alimentation et le circuit et une position dans laquelle la phase du réseau d'alimentation et celle du circuit sont séparées l'une de l'autre. La cuve comporte également un système de commande adapté pour manoeuvrer les conducteurs mobiles simultanément pour les faire passer de la première à la deuxième position et inversement.

Néanmoins, la cuve étant isolée par un fluide diélectrique, tel qu'un gaz d'hexafluorure de soufre, il est nécessaire que le système de commande, qui est extérieur aux éléments de cuve, soit relié aux conducteurs mobiles par des mécanismes étanches, via une tringlerie externe qui est relativement complexes. Avec une telle cuve il est donc nécessaire de prévoir autant de mécanismes étanches que de phases du réseau d'alimentation. En raison de cette multiplicité de mécanismes étanches, une telle cuve est relativement complexe à fabriquer. De plus, chaque élément de cuve étant indépendant les uns des autres, il en résulte une multiplication des opérations de maintenance et de surveillance, et des risques de fuites au niveau de chacun des mécanismes étanches.

Afin de remédier à ces inconvénients, il est connu, notamment du document US 2012/0113568, de prévoir une cuve d'appareillage monobloc. Une telle cuve se différencie d'une cuve selon l'art antérieur décrite ci-dessus en ce qu'elle est constituée d'une pluralité de chambres en communication fluidique contenant chacune un conducteur mobile et correspondant chacune à une phase du réseau d'alimentation.

Une telle cuve présente l'avantage de permettre l'aménagement d'un mécanisme interne de manoeuvre des conducteurs mobiles et de présenter un unique volume de fluide. Il en résulte donc que, pour la manipulation simultanée des conducteurs mobiles, il n'est nécessaire de prévoir qu'un seul mécanisme étanche pour le système de commande extérieur du mécanisme de manoeuvre. Les opérations de maintenance et de surveillance sont également simplifiées puisqu'il est possible de contrôler la bonne isolation électrique des chambres en une seule fois et qu'il est possible de purger les chambres en fluide en une seule opération.

Néanmoins, une telle cuve est relativement onéreuse à fabriquer en raison de sa forme complexe, le moule permettant de former la cuve avec ses chambres étant relativement complexe (voir notamment la complexité de la forme de la cuve sur la figure la du document US 2012/0113568). De plus, la mise en place des mécanismes de manoeuvre internes de différents conducteurs mobiles est également relativement complexe ce qui augmente significativement les coûts de montage d'une telle cuve d'appareillage.

Il est également connu du document JP 2011/229195 de former une cuve similaire à celle du document US 2012/0113568 ceci à partir d'une pluralité d'éléments de cuve de base distinct et dédié chacun à l'une des phases de la cuve. Chacun de ces éléments de cuve de base comprend un corps délimitant une chambre destinée à contenir un conducteur mobile et à être emplie du fluide diélectrique,

Le corps d'un élément de cuve donné comporte:
- au moins une première face, ladite première face comprenant un premier moyen de connexion,
- au moins une deuxième face ouverte, ladite deuxième face comportant un deuxième moyen de connexion complémentaire au premier moyen de connexion de manière à permettre la connexion en communication fluidique de l'élément de cuve de base avec un deuxième élément de cuve. On notera que la forme de l'élément doit être adaptée, comme le montre les figures 3 et 4 du document JP 2011/229195, en fonction de la phase auquel il correspond.

### EXPOSÉ DE L'INVENTION

L'invention a pour but de fournir une cuve relativement simple à fabriquer vis-à-vis d'une cuve monobloc de l'art antérieur, qui permet de bénéficier des avantages d'une telle cuve monobloc, à savoir, un système de commande permettant la manoeuvre de plusieurs conducteurs avec un seul mécanisme étanche, tel qu'un mécanisme rotatif étanche, et des opérations de maintenance et de surveillance facilitées.

A cet effet, l'invention concerne un élément de cuve de base pour former une cuve d'appareillage de coupure ou d'isolement d'un circuit à haute tension comportant au moins deux phases, ledit appareillage étant isolé par un fluide diélectrique, ledit élément de cuve de base comportant :
- un corps délimitant une chambre destinée à contenir un conducteur mobile et à être emplie du fluide diélectrique,
le corps comportant:
- au moins une première face, ladite première face comprenant un premier moyen de connexion,
- au moins une deuxième face ouverte, ladite deuxième face comportant un deuxième moyen de connexion complémentaire au premier moyen de connexion de manière à permettre la connexion en communication fluidique de l'élément de cuve de base avec un deuxième élément de cuve du même.

De tels éléments de cuve de base présentent l'avantage d'être relativement simples à fabriquer vis-à-vis d'une cuve monobloc de l'art antérieur. En effet, ces éléments de cuve de base ne comportent qu'un seul corps sur lequel sont aménagées deux faces comprenant chacune un moyen de connexion tel qu'une bride. Le moule permettant leur fabrication ne représente donc aucune difficulté particulière pour l'homme du métier contrairement à celui d'une cuve d'appareillage monobloc de l'art antérieur.

Ces éléments de cuve de base permettent, avec des adaptations restreintes, telle que l'utilisation d'un système de fermeture, de former une cuve qui présente les mêmes avantages que celle d'une cuve d'appareillage monobloc de l'art antérieur. En effet, une cuve formée de tels éléments de cuve de base assemblés selon l'invention permet d'utiliser un mécanisme de manoeuvre des conducteurs mobiles qui est interne, rotatif, et qui ne nécessite donc qu'un unique système de commande. De plus, les différentes chambres formées par les éléments de cuve sont en communication fluidique. Il est donc possible lors des opérations de maintenance, d'effectuer la purge de la cuve en une seule opération, et il est également possible de contrôler en une seule fois l'état de l'isolement de la cuve.

De plus, avec de tels éléments de cuve de base, le montage du ou des bras de manoeuvre est facilité par le montage indépendant des chambres contenant les conducteurs mobiles.

La première face est fermée, le premier moyen de connexion délimitant une portion sacrificielle de la première face,
et le deuxième moyen est adapté pour permettre une connexion au premier moyen d'un deuxième élément de cuve de base du même type dont la portion sacrificielle de la première face a été préalablement supprimée.

Avec une telle première face fermée, il n'est pas nécessaire de prévoir de système de fermeture pour fermer la cuve sans que cela n'empêche la mise en communication fluidique entre deux éléments de cuve consécutifs. En effet, la portion sacrificielle du deuxième élément de cuve peut aisément être supprimée avant la connexion pour autoriser une telle mise en communication fluidique.

La première face peut être ouverte, le premier moyen de connexion délimitant l'ouverture de ladite première face.

Une telle face ouverte permet une mise en communication fluidique entre deux éléments de cuve consécutifs, sans que cela n'empêche la fermeture de la cuve les comportant. En effet, l'ouverture de la première face peut aisément être fermée par un système de fermeture adapté pour être connecté au premier moyen de connexion.

La deuxième face peut comporter une extension tubulaire formant un passage pour un bras de manoeuvre du conducteur mobile, une première extrémité de l'extension tubulaire formant l'ouverture de la deuxième face, la deuxième extrémité de l'extension tubulaire étant en communication fluidique avec la chambre.

Une telle extension tubulaire permet de fournir un espace adapté pour la transmission de mouvement entre deux conducteurs mobiles de deux éléments de cuve consécutifs connectés ensemble par ladite extension tubulaire.

La deuxième face peut comporter, au niveau de la deuxième extrémité de l'extension tubulaire, un troisième moyen de connexion, ledit troisième moyen de connexion étant conformé pour autoriser sa connexion avec un moyen complémentaire après ablation de l'extension tubulaire.

Un tel troisième moyen de connexion offre la possibilité, avec un seul et même élément de cuve de base, de connecter au moyen du deuxième moyen de connexion la deuxième face de l'élément de cuve de base à un élément de cuve comportant le premier moyen de connexion, ou de connecter au moyen du troisième connecteur un système de commande dont le moyen de connexion est différent du premier moyen de connexion.

Le troisième moyen de connexion peut être une excroissance de l'extension tubulaire conformée pour former une bride après l'ablation de l'extension tubulaire.

La deuxième face peut comporter un troisième moyen de connexion conformé pour autoriser sa connexion avec un moyen de connexion complémentaire, l'extension tubulaire étant une pièce rapportée au reste du corps et comportant au niveau de sa deuxième extrémité un quatrième moyen de connexion complémentaire au troisième moyen de connexion.

Une extension tubulaire formée par une pièce rapportée au reste du corps permet de supprimer l'extension tubulaire du reste du corps dans le cas où il est nécessaire de connecter le reste du corps à un élément extérieur, tel qu'un système de commande. On évite ainsi d'avoir à passer, contrairement aux éléments de cuve dont le corps est monobloc, par l'étape définitive qu'est l'ablation de l'extension tubulaire.

Le premier moyen de connexion est une première bride annulaire, le deuxième moyen de connexion étant une deuxième bride complémentaire à la première bride de manière à permettre la connexion et la mise en communication fluide de l'élément de cuve de base avec un deuxième élément de cuve de base du même type dont la portion sacrificielle a préalablement été supprimée.

De telles brides permettent des connexions fiables et étanches qui sont relativement simples. On assure ainsi à moindre coût l'étanchéité de la cuve d'appareillage qui sera formée avec lesdits éléments de cuve de base.

L'invention concerne en outre une cuve d'appareillage de coupure ou d'isolation d'un circuit à haute tension comportant au moins deux phases, ledit appareillage étant isolée par un fluide diélectrique, ladite cuve d'appareillage comportant au moins un élément de cuve par phase, au moins un parmi deux éléments de cuve consécutifs est un élément de cuve de base, ledit élément de cuve de base ayant son premier moyen de connexion connecté au deuxième moyen de connexion de l'autre élément de cuve parmi les deux éléments de cuve consécutifs ceci de manière à ce que deux éléments de cuve consécutifs soient connectés en communication fluidique.

Au moins un parmi deux éléments de cuve consécutifs peut être un élément de cuve de base comportant une face avec une portion sacrificielle dont la portion sacrificielle a été préalablement supprimée de manière à ouvrir sa première face, ledit élément de cuve de base ayant son premier moyen de connexion connecté au deuxième moyen de connexion de l'autre élément de cuve parmi les deux éléments de cuve consécutifs ceci de manière à ce que deux éléments de cuve consécutifs soient en communication fluidique.

De telles cuves, en étant formées à partir d'éléments de cuve de base peu coûteux à fabriquer vis-à-vis d'une cuve monobloc de l'art antérieur, sont elles-mêmes relativement peu coûteuses à fabriquer vis-à-vis de cette même cuve monobloc ceci en présentant les mêmes avantages.

La cuve d'appareillage peut comporter un conducteur mobile par élément de cuve logé dans la chambre de ce même élément de cuve, les conducteurs mobiles de deux éléments de cuve consécutifs étant reliés mécaniquement l'un à l'autre par un bras de manoeuvre passant par l'ouverture au niveau de la connexion entre lesdits deux éléments de cuve consécutifs.

Un tel bras de manoeuvre permet de fournir une connexion mécanique interne entre deux conducteurs mobiles consécutifs. Ainsi, pour commander le déplacement des éléments mobiles d'une telle cuve, il n'est nécessaire de prévoir qu'un seul système de commande pour déplacer le premier conducteur mobile, le mouvement étant transmis par les bras de manoeuvre aux autres conducteurs mobiles.

L'un des éléments de cuve peut ne pas être connecté à un autre élément de cuve au niveau de sa deuxième face et est connecté au niveau de la deuxième face à un système de commande configuré pour être relié au conducteur mobile de l'élément non connecté à un autre élément de cuve au niveau de sa deuxième face au moyen d'un ou du bras de manoeuvre de manière à fournir une commande de déplacement dudit conducteur mobile qui est extérieur à la cuve

Un tel système de commande permet de commander le déplacement de l'ensemble des conducteurs mobiles de la cuve d'appareillage.

L'invention concerne en outre un procédé de fabrication, ou montage, d'une cuve d'appareillage selon invention, comportant les étapes suivantes :
- fourniture d'au moins deux éléments de cuve de base (10, 110) selon l'invention,
- connexion des éléments de cuve de base les uns avec les autres avec le deuxième moyen de l'un connecté avec le premier moyen de connexion de l'autre.

Le procédé comporte entre l'étape de fourniture des éléments de cuve de base et l'étape de connexion des éléments de cuve de base, l'étape suivante :
- suppression sur tous les éléments de cuve de base, sauf un, de la portion sacrificielle,
   et pendant l'étape de connexion des éléments de cuve de base les uns avec les autres, pour deux éléments de cuve consécutif, le deuxième moyen d'un élément de cuve de base étant connecté avec le premier moyen de connexion de l'autre élément de cuve de base, l'autre élément de cuve de base étant un élément de cuve de base dont la portion sacrificielle a été supprimée.

De tels procédés permettent la fabrication de cuves d'appareillage présentant les mêmes avantages qu'une cuve monobloc de l'art antérieur sans présenter la complexité de fabrication, la fabrication étant réalisée avec un seul type d'élément de cuve de base relativement simple à fournir.

Le procédé de fabrication peut comporter les étapes supplémentaires de :
- fourniture d'un conducteur mobile par élément de cuve de base,
- installation desdits conducteurs mobiles chacun dans le corps de l'élément de cuve de base correspondant,
- fourniture d'au moins un arbre de manoeuvre,
- lors de l'opération de connexion des éléments de cuve, installation de l'au moins un arbre de manoeuvre de manière à relier mécaniquement les conducteurs mobiles entre eux,
- fourniture d'un système de commande adapté pour commander la manoeuvre de l'arbre de manoeuvre,
- connexion du système de commande au niveau de la deuxième face de l'élément de cuve de base qui présente son deuxième moyen de connexion libre.

Ces étapes supplémentaires permettent de fournir des moyens de manoeuvre des conducteurs mobiles de la cuve relativement simple et ne nécessitant qu'un mécanisme dynamique étanche pour transmettre la commande à l'ensemble des conducteurs mobiles.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre un exemple de cuve de sectionneur à haute tension destinée à relier un circuit à haute tension à un réseaux de trois phases,
- la figure 2 illustre un élément de cuve de base destiné à former la cuve de sectionneur illustrée sur la figure 1,
- la figure 3 illustre en vue en éclaté d'une cuve de sectionneur telle qu'illustrée sur la figure 1 ceci de manière à figurer le montage d'une telle cuve,
- la figure 4 illustre une variante d'un élément de cuve de base permettant de former une cuve telle qu'illustrée sur la figure 1, ledit élément de cuve comportant un système de secteurs annulaires filetés pour la connexion entre éléments de cuve,
- la figure 5 illustre une cuve de sectionneur selon un deuxième mode de l'invention dans lequel les éléments de cuve de base formant cette cuve comporte, avant montage, une première face fermée,
- les figures 6a) à e) illustrent un élément de cuve de base destiné à former la cuve de sectionneur illustrée sur la figure 5 et les différentes configurations des première et deuxième faces accessibles pour un tel élément de cuve,
- la figure 7 illustre une vue en éclaté d'une cuve de sectionneur telle qu'illustrée sur la figure 5 ceci de manière à montrer le montage d'une telle cuve.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

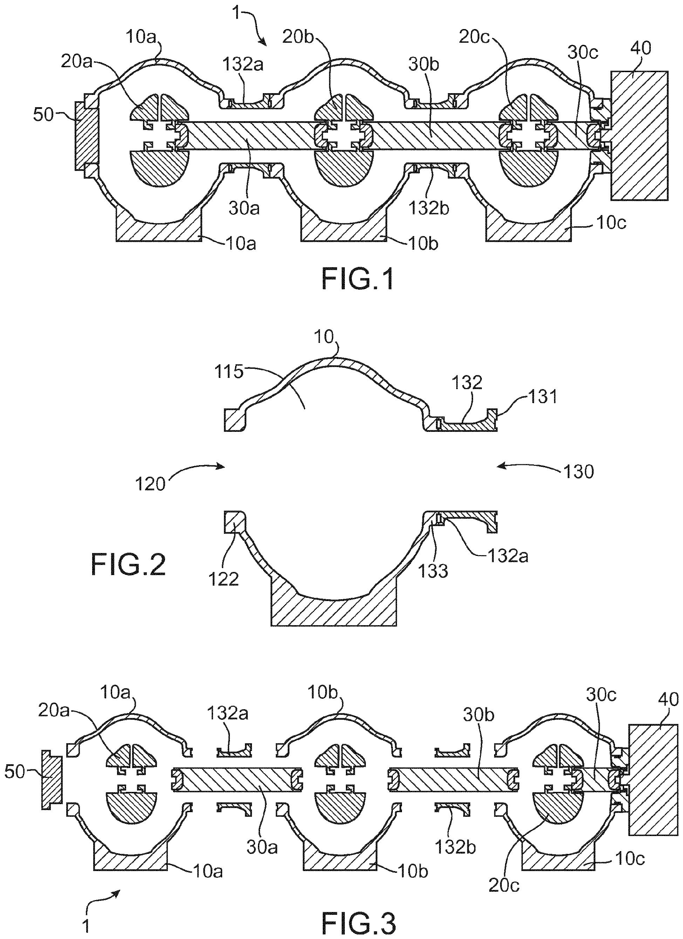

La figure 1 illustre un exemple d'une cuve de sectionneur 1 ne faisant pas partie de l'invention.

Une telle cuve de sectionneur 1 est une cuve de sectionneur à haute tension isolée par un fluide diélectrique, tel qu'un gaz d'hexafluorure de soufre. La cuve de sectionneur 1 est destinée à la séparation d'un circuit haute tension, non illustré, d'un réseau électrique à haute tension, non illustré, comportant trois phases.

Une telle cuve de sectionneur 1 est décrite à titre d'exemple de mise en oeuvre de l'invention. Ainsi, l'invention ne se limite donc pas uniquement au sectionneur mais concerne plus généralement les appareillages de coupure ou d'isolation de circuit à hautes tension, lesdits appareillages étant du type d'appareillage qui est isolé par un fluide diélectrique. Ainsi, l'invention peut également être mise en oeuvre sur une cuve de sectionneur de mise à la terre, c'est-à-dire que lors de la séparation du circuit du réseau d'alimentation, le circuit est mis à la terre de manière à totalement le mettre en sécurité pendant l'intervention d'un opérateur. Selon une possibilité de l'invention, la cuve de sectionneur 1 peut ainsi être également une cuve de sectionneur d'un sectionneur du type disjoncteur-sectionneur ou encore concerner une éclisse de maintenance.

Une cuve de sectionneur 1 selon l'exemple de la figure 1 comporte :
- trois éléments de cuve 10a, 10b, 10c,
- trois conducteurs mobiles 20a, 20b, 20c chacun contenu dans un élément de cuve 10a, 10b, 10c correspondant,
- un système de commande 40, et
- trois bras de manoeuvre 30a, 30b, 30c, isolants reliant mécaniquement les conducteurs mobiles au système de commande 40,
- un système de fermeture 50 étanche.

Chaque élément de cuve 10a, 10b, 10c comporte, comme illustré sur l'élément de base 10 montré sur la figure 2, un corps 115 délimitant une chambre destinée à contenir le conducteur mobile 20a, 20b, 20c correspondant audit élément de cuve 10a, 10b, 10c.

Le corps comporte une première face 120 et une deuxième face 130 qui sont, dans une configuration usuelle, disposées à l'opposé l'une de l'autre.

Chacun des éléments de cuve 10a, 10b, 10c équipant la cuve de sectionneur 1 illustrée sur la figure 1, est identique à l'élément de cuve de base 10 illustré sur la figure 2, si ce n'est que l'un des éléments de cuve 10c comportant le système de commande 40 ne comporte pas d'extension tubulaire 132.

L'élément de cuve 10 de base comporte au niveau de sa première face 120 une première bride 122. La première bride 122 s'étend à partir du corps 115. La première bride 122 délimite par son périmètre intérieur une ouverture de la première face 120 qui est en communication avec la chambre.

La première bride 122 forme un premier moyen de connexion délimitant une ouverture de la première face 120. La première bride 122 est conformée pour autoriser la fermeture de l'ouverture qu'elle délimite au moyen du système de fermeture 50.

L'élément de cuve 10 de base comporte en outre au niveau de sa deuxième face l'extension tubulaire 132 en communication fluidique avec la chambre. L'extension tubulaire 132 est une pièce rapportée au reste du corps 115. L'extension tubulaire 132 comporte une première extrémité formant la base du tube et une deuxième extrémité formant la deuxième base du tube, toutes deux ouvertes. L'extension tubulaire 132 est montée sur le reste du corps 115 en communication fluidique avec la chambre par sa deuxième extrémité. La première extrémité de l'extension tubulaire 132 forme, par son ouverture, une ouverture de la deuxième face 130 du corps 115.

L'extension tubulaire 132 comporte au niveau de sa première extrémité une deuxième bride 131 complémentaire à la première bride 122. L'extension tubulaire 132 comporte également au niveau de sa deuxième extrémité une quatrième bride 132a. Cette quatrième bride 132a est conformée pour être connectée à une troisième bride 133 ménagée sur la deuxième face du corps, ceci de manière à permettre le montage de l'extension tubulaire 132 sur le reste du corps 115.

Ainsi, en l'absence de l'extension tubulaire 132, le reste du corps 115 présente au niveau de sa deuxième face une troisième bride 133 conformée pour être connectée à autre élément, tel que l'extension tubulaire 132 ou le système de commande 40.

La troisième bride 133 forme un troisième moyen de connexion qui est adaptée pour permettre la connexion du système de commande 40.

La deuxième bride 131 forme un deuxième moyen de connexion complémentaire à la première bride 122, c'est-à-dire, au premier moyen de connexion que cette première bride 122 forme.

Un tel élément de cuve 10 de base permet de fournir, comme illustré sur les figures 1 et 3, l'ensemble des éléments de cuve 10a, 10b, 10c nécessaires pour former une cuve de sectionneur 1 selon l'exemple de la figure 1 à savoir :
- un élément de cuve 10a de fermeture, comportant sur sa première face 120 le système de fermeture 50 et comportant l'extension tubulaire 132,
- un élément de cuve 10b de connexion, relié à l'élément de cuve 10a de fermeture par sa première bride 122 et comportant l'extension tubulaire 132,
- un élément de cuve 10c de commande, relié à l'élément de cuve 10b de fermeture par sa première bride 122, ne comportant pas l'extension tubulaire et connecté, par sa troisième bride 133 au système de commande 40.

Ainsi, avec un seul type d'éléments de cuve de base 10, il est possible d'obtenir les trois configurations d'élément de cuve 10a, 10b, 10c requises pour la fabrication d'une cuve de sectionneur 1.

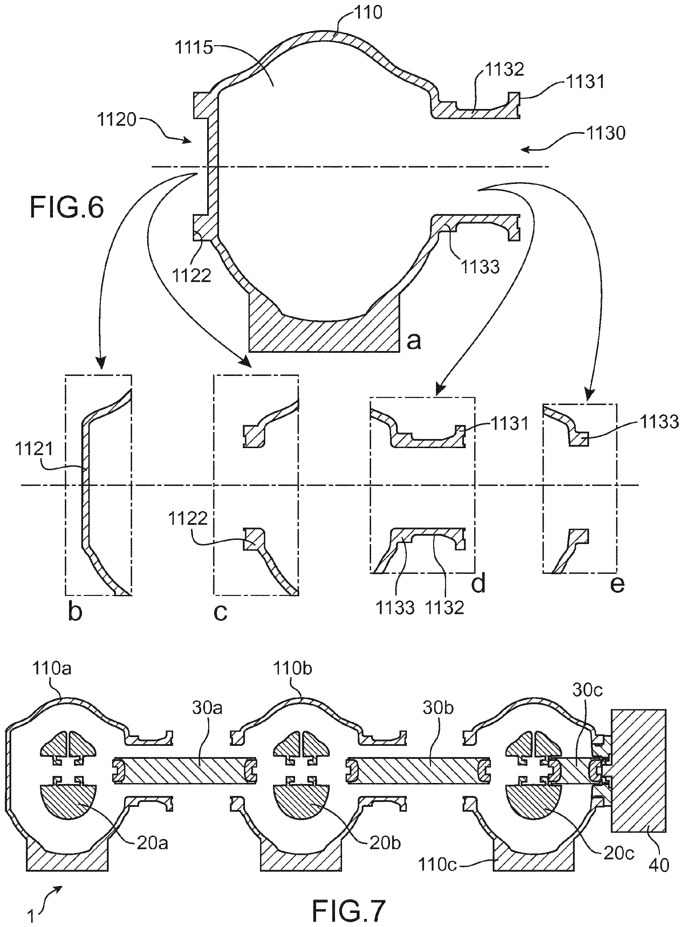

La procédure de fabrication, ou montage, d'une cuve de sectionneur à partir d'élément de cuve de base 10 comprend donc les étapes suivantes :
- fourniture de trois éléments de cuve de base 10, dont un ne comportant pas l'extension tubulaire 132,
- fourniture de trois conducteurs mobiles 20a, 20b, 20c,
- installation des conducteurs mobiles 20a, 20b, 20c, chacun dans un élément de cuve de base 10 correspondant parmi les trois éléments de cuve de base 10,
- fourniture de deux arbre de manoeuvre 30a, 30b,
- connexion, comme illustré sur la figure 6, des éléments de cuve de base 10 deux à deux, avec la deuxième bride 131 connectée avec la première bride d'un élément de cuve de base 10, les arbres de manoeuvre 30a, 30b étant alors installées dans l'ouverture connectant deux éléments de cuve de base 10 consécutifs de manière à relier mécaniquement les conducteurs mobiles 20a, 20b, 20c de ces deux éléments de cuve de base 10.

Lors de cette dernière étape de connexion il est également mis en oeuvre les étapes suivantes pour connecter un système de commande 40 à la cuve de sectionneur 1 :
- fourniture d'au moins un arbre de manoeuvre 30c,
- fourniture d'un système de commande 40 adapté pour commander la manoeuvre de l'arbre de manoeuvre 30c,
- connexion du système de commande 40 à l'élément de cuve de base 10 qui présente sa deuxième face libre d'élément de cuve et qui est celui ne comportant pas d'extension tubulaire, le système de commande 40 étant connecté sur la troisième bride de ce dernier élément de cuve 10 en étant relié mécaniquement au conducteur mobile 20c par l'arbre de manoeuvre 30c.

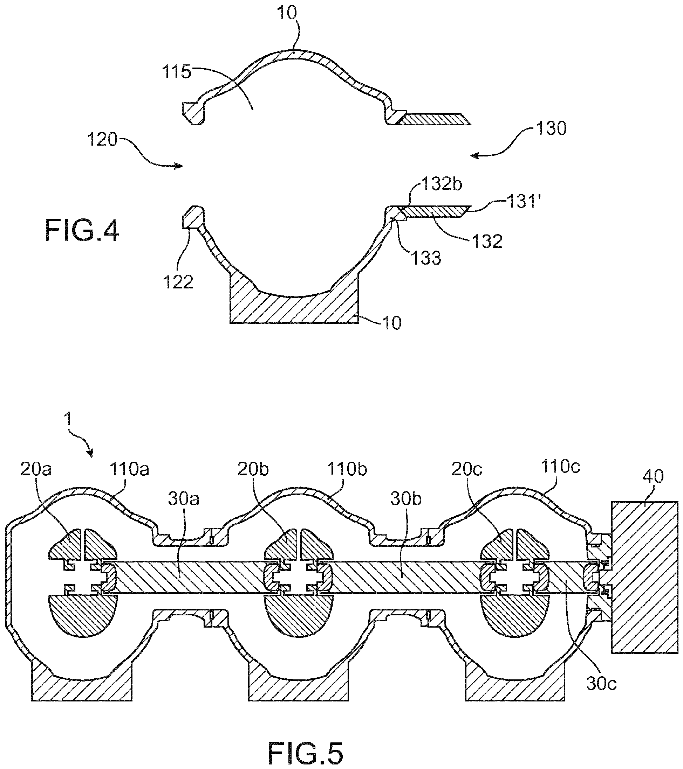

La figure 4 illustre une variante de l'élément de cuve 10 de base selon l'exemple de la figure 1 dans laquelle l'extension tubulaire est connectée au reste du corps 115 au moyen d'un premier secteur annulaire fileté 132b prévue sur cette même extension tubulaire 132. Ce premier secteur annulaire fileté 132b est ménagé au niveau de la deuxième extrémité de l'extension tubulaire 132 sur son pourtour extérieur. Ce secteur annulaire fileté 132b est adapté pour se visser sur un secteur annulaire fileté complémentaire aménagé sur le reste du corps 115 au niveau de la deuxième bride 133.

Selon cette variante, l'extension tubulaire 132 comporte également au niveau de sa première extrémité un deuxième secteur annulaire fileté 131' formant un deuxième moyen de connexion adapté pour être vissé sur un secteur annulaire fileté complémentaire aménagé sur la première face 120 sur la surface interne de la première bride 122.

Dans cette variante, le secteur annulaire fileté complémentaire aménagé sur la première face 120 forme le premier moyen de connexion.

Un tel secteur annulaire fileté complémentaire aménagé sur la première face 120 permet de fournir une première bride qui est adaptée pour être connecté à l'extension tubulaire 132 d'un autre élément de cuve de bas 10, ceci en raison de l'adaptation du secteur annulaire fileté complémentaire, tout en étant conformé pour être connecté à un autre élément, tel qu'un système de fermeture 50, ceci en raison de la forme de la troisième bride 122 en elle-même.

La figure 5 illustre une cuve de sectionneur 1 selon l'invention dans lequel l'élément de cuve de base 110 comporte un corps 1115 avec une première face 1120 fermée, ladite première face 1120 présentant une portion sacrificielle 1121 et une deuxième face 1130 comportant une extension tubulaire 1132 qui lui est solidaire, le corps 1115 étant ainsi monobloc. Une cuve de sectionneur 1 selon l'invention se différencie d'une cuve de sectionneur 1 selon l'exemple des figures 1 à 4 en ce que l'élément de cuve de base 110 peut être modifié pour former les différentes parties de la cuve de sectionneur 1.

Ainsi la cuve de sectionneur 1 selon ce deuxième mode de réalisation comporte :
- trois éléments de cuve 110a, 110b, 110c,
- trois conducteurs mobiles 20a, 20b, 20c, chacun contenu dans un élément de cuve 110a, 110b, 110c correspondant,
- un système de commande 40, et
- trois bras de manoeuvre 30a, 30b, 30c, isolants reliant mécaniquement les conducteurs mobiles au système de commande 40.

Chaque élément de cuve 110a, 110b, 110c comporte, comme illustré sur l'élément de base montré sur la figure 6a, un corps 1115 délimitant une chambre destinée à contenir le conducteur mobile 20a, 20b, 20c correspondant audit élément de cuve 110a, 110b, 110c.

Le corps comporte une première face 1120 et une deuxième face 1130 qui sont, dans une configuration usuelle, disposées à l'opposé l'une de l'autre.

Chacun des éléments de cuve 110a, 110b, 110c équipant la cuve de sectionneur 1 illustrée sur la figure 5, est obtenu à partir de l'élément de cuve de base 110 illustré sur la figure 6a.

L'élément de cuve 110 de base comporte au niveau de sa première face 1120 une première bride 1122. La première bride 1122 s'étend à partir du corps 1115. La première bride 1122 délimite par son périmètre intérieur une portion 1121 de la première face 1120 qui est dite sacrificielle.

La première bride 1122 forme un premier moyen de connexion délimitant la portion sacrificielle 1120.

L'élément de cuve 110 de base comporte en outre au niveau de sa deuxième face une extension tubulaire 1132 en communication fluidique avec la chambre. L'extension tubulaire 1132 est solidaire du reste du corps 1115, le corps 1115 étant monobloc. L'extension tubulaire 1132 comporte une première extrémité formant la base du tube et une deuxième extrémité formant la deuxième base du tube, toutes deux ouvertes. L'extension tubulaire 1132 est en communication fluidique avec la chambre par sa deuxième extrémité. La première extrémité de l'extension tubulaire 1132 forme, par son ouverture, une ouverture de la deuxième face 1130 du corps 1115.

L'extension tubulaire 1132 comporte au niveau de sa première extrémité une deuxième bride 1131 complémentaire à la première bride 1122. L'extension tubulaire 1132 comporte également au niveau de sa deuxième extrémité une excroissance 1133. L'excroissance 1133 est conformée pour former une bride après l'ablation de l'extension tubulaire 1132.

L'excroissance 1133 représente une surépaisseur de la paroi de l'extension tubulaire 1132 s'étendant sur une partie de la hauteur de l'extension tubulaire 1132 à partir du corps 1115 en direction de la première extrémité.

La deuxième bride forme un deuxième moyen de connexion complémentaire à la première bride 1122, c'est-à-dire, au premier moyen de connexion que cette première bride 1122 forme.

De même, après ablation de l'extension tubulaire 1132 d'un élément de cuve de base 110, son excroissance 1133 forme une troisième bride qui est adaptée pour permettre la connexion du système de commande 40.

L'élément de cuve de base 110 est adapté pour permettre l'obtention des trois configurations d'éléments de cuve 110a, 110b, 110c illustrées sur la figure 5, à savoir :
- un élément de cuve 110a de fermeture, présentant une première face 1120 fermée et comportant l'extension tubulaire 1132,
- un élément de cuve 110b de connexion, présentant sa première face 1120 ouverte et comportant l'extension tubulaire 1132,
- un élément de cuve 110c de commande, présentant sa première face 1120 ouverte et ayant eu son extension tubulaire ablatée.

L'élément de cuve 110a de fermeture peut être obtenu en supprimant sur l'élément de cuve de base 110 la bride 1122 de la première face comme illustré sur la figure 6b. Pour cet élément de cuve 110b de fermeture, la deuxième face n'est pas modifiée, comme illustré sur la figure 6d. On obtient ainsi un élément de cuve 110a comportant une première face 1120 fermée et lisse, une deuxième face 1130 équipée de l'extension tubulaire 1132 et de la deuxième bride 1131.

L'élément de cuve 110b de connexion peut être obtenu en supprimant la portion sacrificielle 1121 de l'élément de cuve de base 110, comme illustré figure 6c. La deuxième face n'est pas modifiée pour obtenir cet élément de cuve 110b de connexion. On obtient donc un élément de cuve 110b comportant une première face 1120 ouverte équipée de la première bride 1122 et une deuxième face équipée de l'extension tubulaire 1132 et de la deuxième bride 1131. Un tel élément de cuve 110b de connexion est donc un élément de cuve de base 110 dont la portion sacrificielle 1121 a été préalablement supprimée.

L'élément de cuve 110c de commande peut être obtenu en supprimant sur l'élément de cuve de base 110 la portion sacrificielle 1121, comme illustré sur la figure 6c, et en effectuant une ablation de son extension tubulaire 1132 de manière à ce que l'excroissance 1133 forme la troisième bride. On obtient ainsi un élément de cuve 110c comportant une première face 1120 ouverte équipée de la première bride 1122 et une deuxième face 1130 présentant la troisième bride pour le montage du système de commande 40. L'élément de cuve 110c est donc un élément de cuve de base 110 dont la portion sacrificielle 1121 a préalablement été supprimée et sur lequel une ablation de l'extension tubulaire 1132 a été effectuée.

Ainsi, avec un seul type d'éléments de cuve de base 110, il est possible d'obtenir les trois configurations d'élément de cuve 110a, 110b, 110c requises pour la fabrication d'une cuve de sectionneur 1.

La procédure de montage d'une cuve de sectionneur à partir d'élément de cuve de base 110 comprend donc les étapes suivantes :
- fourniture de trois éléments de cuve de base 110,
- suppression sur deux éléments de cuve de base 110 de la portion sacrificielle 1121,
- suppression sur l'élément de cuve de base 110 comportant encore sa portion sacrificielle 1121 de la première bride 1122, ceci de manière à former l'élément de cuve 110a de fermeture,
- ablation de l'extension tubulaire 1132 sur l'un des deux éléments de cuve de base 110 dont la portion sacrificielle a été supprimée, ceci de manière à former l'élément de cuve 110c de commande,
- fourniture de trois conducteurs mobiles 20a, 20b, 20c,
- installation des conducteurs mobiles 20a, 20b, 20c, chacun dans un élément de cuve de base 110 correspondant parmi les trois éléments de cuve de base 110,
- fourniture de deux arbres de manoeuvre 30a, 30b,
- connexion, comme illustré sur la figure 7, des éléments de cuve de base 110 ensemble, avec la deuxième bride 1131 connectée avec la première bride d'un élément de cuve de base 110 dont la portion sacrificielle a été préalablement supprimée, les arbres de manoeuvre 30a, 30b étant alors installés dans l'ouverture

connectant deux éléments de cuve de base 110 consécutifs de manière à relier mécaniquement les conducteurs mobiles 20a, 20b, 20c de ces deux éléments de cuve de base 110.

Lors de cette dernière étape de connexion il est également mis en oeuvre les étapes suivantes pour connecter un système de commande 40 à la cuve de sectionneur 1 :
- fourniture d'au moins un arbre de manoeuvre 30c,
- fourniture d'un système de commande 40 adapté pour commander la manoeuvre de l'arbre de manoeuvre (30c),
- connexion du système de commande 40 à l'élément de cuve de base 110 qui présente sa deuxième face libre d'élément de cuve, le système de commande 40 étant connecté sur la troisième bride de ce dernier élément de cuve 110 en étant relié mécaniquement au conducteur mobile 20c par l'arbre de manoeuvre 30c.

Ainsi une telle cuve de sectionneur 1 comprend trois éléments de cuve 110a, 110b, 110c avec, pour deux éléments de cuve 110a, 110b 110c consécutifs, au moins un parmi les deux éléments de cuve consécutifs qui est un élément de cuve de base 110 dont la portion sacrificielle 1121 a été préalablement supprimée de manière à ouvrir sa première face 1120 dudit élément de cuve de base 110. Ledit élément de cuve de base 110 est connecté par sa première bride 1122 à la deuxième bride de l'autre élément de cuve parmi les deux éléments de cuve consécutifs. De cette manière, deux éléments de cuve consécutifs de la cuve de sectionneur 1 sont en communication fluidique et peuvent accueillir au niveau de leur connexion, c'est-à-dire par l'extension tubulaire 1132 par laquelle ils sont connectés, un bras de manoeuvre pour relier mécaniquement leurs conducteurs mobiles respectifs.

De même, dans cette cuve de sectionneur 1, telle qu'illustrée sur la figure 5, l'élément de cuve qui n'est pas connecté à un autre élément de cuve au niveau de sa deuxième face, est connecté au système de commande 40. Pour ce faire, cet élément de cuve est un élément de cuve de base 110 dont l'extension tubulaire 1132 a subi une ablation. De cette manière, le système de commande peut être connecté à la troisième bride formée par l'excroissance 1133.

Il est à noter que si l'élément de cuve 110a de fermeture est un élément de cuve de base 110 dont la première bride 1122 a été supprimée, il est également envisageable, sans que l'on sorte du cadre de l'invention, que l'élément de cuve 110a de fermeture comporte une première bride 1122.

De même, si l'élément de cuve 110c de commande est un élément de cuve de base 110 dont l'extension tubulaire a subi une ablation, il est également envisageable, sans que l'on sorte du cadre de l'invention, que ce même élément de cuve 110c de commande soit un élément de cuve de base 110. Dans une telle configuration le système de commande 40 peut comporter une bride complémentaire à la deuxième bride 1131, c'est-à-dire la première bride 1122. Bien entendu, avec une telle configuration l'excroissance 1133 n'est pas nécessaire et l'élément de cuve de base 110 peut ne pas en comporter.

## Revendications

1. Élément de cuve de base (10, 110) pour former une cuve d'appareillage (1) de coupure ou d'isolement d'un circuit à haute tension comportant au moins deux phases, ledit appareillage étant isolé par un fluide diélectrique et, ledit élément de cuve de base (10, 110) comportant :
- un corps (115, 1115) délimitant une chambre destinée à contenir un conducteur mobile (20a, 20b, 20c) et à être emplie du fluide diélectrique,
le corps (115, 1115) de l'élément de cuve comportant:
- au moins une première face (120, 1120), ladite première face comprenant un premier moyen de connexion,
- au moins une deuxième face (130, 1130) ouverte, ladite deuxième face (130, 1130) comportant un deuxième moyen de connexion complémentaire au premier moyen de connexion de manière à permettre la connexion en communication fluidique de l'élément de cuve de base (10, 110) avec un deuxième élément de cuve (10, 110) du même type, l'élément de cuve de base (10, 110) étant **caractérisé en ce que** la première face (1120) est fermée, le premier moyen de connexion délimitant une portion sacrificielle (1121) de la première face (1120), et **en ce que** le deuxième moyen est adapté pour permettre une connexion au premier moyen d'un deuxième élément de cuve de base (110) du même type dont la portion sacrificielle (1121) de la première face (1120) a été préalablement supprimée.

2. Élément de cuve de base (10, 110) la revendication 1 ou 2, dans lequel la deuxième face (130, 1130) comporte une extension tubulaire (132, 1132) formant un passage pour un arbre de manoeuvre (30a, 30b, 30c) du conducteur mobile (20a, 20b, 20c), une première extrémité de l'extension tubulaire (132, 1132) formant l'ouverture de la deuxième face (130, 1130), la deuxième extrémité de l'extension tubulaire (132, 1132) étant en communication fluidique avec la chambre.

3. Élément de cuve de base (110) selon la revendication précédente, dans lequel la deuxième face (1130) comporte, au niveau de la deuxième extrémité de l'extension tubulaire (1132), un troisième moyen de connexion, ledit troisième moyen de connexion étant conformé pour autoriser sa connexion avec un moyen de connexion complémentaire après ablation de l'extension tubulaire (1132).

4. Élément de cuve de base (110) selon la revendication précédente, dans lequel le troisième moyen de connexion est une excroissance (133, 1133) de l'extension tubulaire (132, 1132) conformée pour former une bride après l'ablation de l'extension tubulaire (132, 1132) .

5. Élément de cuve de base (10) selon la revendication 3, dans lequel la deuxième face (130) comporte un troisième moyen de connexion conformé pour autoriser sa connexion avec un moyen de connexion complémentaire, et dans lequel l'extension tubulaire (132, 132a, 132b, 132c) est une pièce rapportée au reste du corps (115) comportant au niveau de sa deuxième extrémité un quatrième moyen de connexion complémentaire au troisième moyen de connexion.

6. Élément de cuve de base (10, 110) selon l'une quelconque des revendications précédentes, dans lequel le premier moyen de connexion est une première bride (122, 1122) annulaire, le deuxième moyen de connexion étant une deuxième bride (131, 1131) complémentaire à la première bride (122, 1122) de manière à permettre la connexion et la mise en communication fluidique de l'élément de cuve de base (10, 110) avec un deuxième élément de cuve de base (10, 110) du même type.

7. Cuve d'appareillage (1) de coupure ou d'isolation d'un circuit à haute tension comportant au moins deux phases, ledit appareillage étant isolée par un fluide diélectrique, ladite cuve d'appareillage (1) comportant au moins deux élément de cuve de base consécutifs, ladite cuve étant **caractérisée en ce que** chacun des deux éléments de cuve de base consécutifs est un élément de cuve de base (10, 110) selon l'une quelconque des revendications 1 à 6, l'un parmi les éléments de cuve de base (10, 110) consécutifs ayant son premier moyen de connexion connecté au deuxième moyen de connexion de l'autre élément de cuve de base (10, 110) parmi les deux éléments de cuve consécutifs, l'autre élément de cuve de base (10, 110) ayant sa portion sacrificielle préalablement supprimée de manière à ouvrir sa première face ceci de manière à ce que deux éléments de cuve consécutifs soient connectés en communication fluidique.

8. Cuve d'appareillage (1) selon la revendication 7 comportant un conducteur mobile (20a, 20b, 20c) par élément de cuve logé dans la chambre de ce même élément de cuve, les conducteurs mobiles (20a, 20b,20c) de deux éléments de cuve consécutifs étant reliés mécaniquement l'un à l'autre par un arbre de manoeuvre (30a, 30b, 30c) passant par l'ouverture au niveau de la connexion entre lesdits deux éléments de cuve consécutifs.

9. Cuve d'appareillage (1) selon la revendication précédente, dans laquelle l'un des éléments de cuve (10c, 110c) n'est pas connecté à un autre élément de cuve au niveau de sa deuxième face (130, 1130) et est connecté au niveau de la deuxième face (130, 1130) à un système de commande (40) configuré pour être relié au conducteur mobile (20c) de l'élément non connecté à un autre élément de cuve au niveau de sa deuxième face (130, 1130) au moyen d'un ou de l'arbre de manoeuvre (30c) de manière à fournir une commande de déplacement dudit conducteur mobile (20c) qui est extérieur à la cuve (1).

10. Procédé de montage d'une cuve d'appareillage (1) selon l'une quelconque des revendications 7 à 9, comportant les étapes suivantes:
- fourniture d'au moins deux éléments de cuve de base (10, 110) selon l'une quelconque des revendications 1 à 6,
- connexion des éléments de cuve de base (10, 110) les uns avec les autres avec le deuxième moyen connexion de l'un connecté avec le premier moyen de connexion de l'autre,
ledit procédé comportant en outre, entre l'étape de fourniture des éléments de cuve de base et l'étape de connexion des éléments de cuve de base, l' étape suivante :
- suppression sur tous les éléments de cuve de base (110), sauf un, de la portion sacrificielle (1121),
et dans lequel, pendant l'étape de connexion des éléments de cuve de base (110) les uns avec les autres, pour deux éléments de cuve consécutif, le deuxième moyen d'un élément de cuve de base (110) étant connecté avec le premier moyen de connexion d'un autre élément de cuve de base (110), l'autre élément de cuve de base (110) étant un élément de cuve de base (110) dont la portion sacrificielle a été supprimée.

11. Procédé de montage selon la revendication 10, comportant les étapes supplémentaires de :
- fourniture d'un conducteur mobile (20a, 20b, 20c) par élément de cuve de base (10, 110),
- installation desdits conducteurs mobiles (20a, 20b, 20c) chacun dans le corps (115, 1115) de l'élément de cuve de base (10, 110) correspondant,
- fourniture d'au moins un arbre de manoeuvre (30a, 30b, 30c),
- lors de l'opération de connexion des éléments de cuve (10, 110), installation de l'au moins un arbre de manoeuvre (30a, 30b, 30c) de manière à relier mécaniquement les conducteurs mobiles (20a, 20b, 20c) entre eux,
- fourniture d'un système de commande (40) adapté pour commander la manoeuvre de l'arbre de manoeuvre (30a, 30b, 30c),
- connexion du système de commande (40) au niveau de la deuxième face de l'élément de cuve de base (10, 110) qui présente son deuxième moyen de connexion libre.

## Patentansprüche

1. Basisbehälterelement (10, 110), um einen Gerätebehälter (1) zur Unterbrechung oder Isolierung einer Hochspannungsschaltung, die mindestens zwei Phasen umfasst, auszubilden, wobei das Gerät durch ein dielektrisches Fluid isoliert ist, wobei das Basisbehälterelement (10, 110) Folgendes umfasst:
- einen Körper (115, 1115), der eine Kammer begrenzt, die dazu vorgesehen ist, eine Schwingspule (20a, 20b, 20c) zu enthalten und mit dem dielektrischen Fluid gefüllt zu werden,
wobei der Körper (115, 1115) des Behälterelements Folgendes umfasst:
- mindestens eine erste Seite (120, 1120), wobei die erste Seite ein erstes Verbindungsmittel aufweist,
- mindestens eine offene zweite Seite (130, 1130), wobei die zweite Seite (130, 1130) ein zweites Verbindungsmittel zusätzlich zu dem ersten Verbindungsmittel dergestalt umfasst, dass die Verbindung in fluidischer Kommunikation des Basisbehälterelementes (10, 110) mit einem zweiten Behälterelement (10, 110) derselben Art ermöglicht wird,
wobei das Basisbehälterelement (10, 110) **dadurch gekennzeichnet ist, dass** die erste Seite (1120) geschlossen ist, wobei das erste Verbindungsmittel einen Opferabschnitt (1121) der ersten Seite (1120) begrenzt,
und dadurch, dass das zweite Mittel dazu eingerichtet ist, eine Verbindung mit dem ersten Mittel eines zweiten Basisbehälterelementes (110) derselben Art zu ermöglichen, dessen Opferabschnitt (1121) der ersten Seite (1120) zuvor unterdrückt wurde.

2. Basisbehälterelement (10, 110) nach Anspruch 1 oder 2, wobei die zweite Seite (130, 1130) eine rohrförmige Verlängerung (132, 1132) umfasst, die einen Durchgang für eine Betätigungswelle (30a, 30b, 30c) der Schwingspule (20a, 20b, 20c) ausbildet, wobei ein erstes Ende der rohrförmigen Verlängerung (132, 1132) die Öffnung der zweiten Seite (130, 1130) ausbildet, wobei das zweite Ende der rohrförmigen Verlängerung (132, 1132) mit der Kammer in fluidischer Kommunikation steht.

3. Basisbehälterelement (110) nach dem vorhergehenden Anspruch, wobei die zweite Seite (1130) in Höhe des zweiten Endes der rohrförmigen Verlängerung (1132) ein drittes Verbindungsmittel umfasst, wobei das dritte Verbindungsmittel angepasst ist, um seine Verbindung mit einem zusätzlichen Verbindungsmittel nach der Ablation der rohrförmigen Verlängerung (1132) zu erlauben.

4. Basisbehälterelement (110) nach dem vorhergehenden Anspruch, wobei das dritte Verbindungsmittel aus einem Vorsprung (133, 1133) der rohrförmigen Verlängerung (132, 1132) besteht, der angepasst ist, um nach der Ablation der rohrförmigen Verlängerung (132, 1132) einen Flansch auszubilden.

5. Basisbehälterelement (10) nach Anspruch 3, wobei die zweite Seite (130) ein drittes Verbindungsmittel umfasst, das angepasst ist, seine Verbindung mit einem komplementären Verbindungsmittel zu erlauben, und wobei es sich bei der rohrförmigen Verlängerung (132, 132a, 132b, 132c) um ein Teil handelt, das an den verbleibenden Körper (115) angesetzt wird, in Höhe seines zweiten Endes ein viertes Verbindungsmittel umfassend, das zu dem dritten Verbindungsmittel komplementär ist.

6. Basisbehälterelement (10, 110) nach einem der vorhergehenden Ansprüche, wobei es sich bei dem ersten Verbindungsmittel um einen ersten ringförmigen Flansch (122, 1122) handelt, wobei es sich bei dem zweiten Verbindungsmittel um einen zweiten Flansch (131, 1131) handelt, der zu dem ersten Flansch (122, 1122) dergestalt komplementär ist, dass die Verbindung und die Herstellung der fluidischen Kommunikation des Basisbehälterelementes (10, 110) mit einem zweiten Basisbehälterelement (10, 110) derselben Art ermöglicht wird.

7. Gerätebehälter (1) zur Unterbrechung oder Isolierung einer Hochspannungsschaltung, die mindestens zwei Phasen umfasst, wobei das Gerät durch ein dielektrisches Fluid isoliert wird, wobei der Gerätebehälter (1) mindestens zwei aufeinanderfolgende Basisbehälterelemente umfasst, wobei der Behälter **dadurch gekennzeichnet ist, dass** es sich bei jedem der beiden aufeinanderfolgenden Basisbehälterelemente um ein Basisbehälterelement (10, 110) nach einem der Ansprüche 1 bis 6 handelt, wobei unter den aufeinanderfolgenden Basisbehälterelementen (10, 110) bei einem ein erstes Verbindungsmittel mit dem zweiten Verbindungsmittel des anderen Basisbehälterelementes (10, 110) unter den beiden aufeinanderfolgenden Basisbehälterelementen verbunden ist, wobei bei dem anderen Basisbehälterelement (10, 110) der Opferabschnitt zuvor dergestalt unterdrückt wurde, dass seine erste Seite offen ist, und zwar dergestalt, dass zwei aufeinanderfolgende Behälterelemente in fluidischer Kommunikation verbunden werden.

8. Gerätebehälter (1) nach Anspruch 7, umfassend eine Schwingspule (20a, 20b, 20c) pro Behälterelement, die in der Kammer desselben Behälterelements untergebracht ist, wobei die Schwingspulen (20a, 20b, 20c) von zwei aufeinanderfolgenden Behälterelementen aneinander durch eine Betätigungswelle (30a, 30b, 30c) mechanisch gekoppelt werden, die durch die Öffnung in Höhe der Verbindung zwischen diesen beiden aufeinanderfolgenden Behälterelementen hindurch führt.

9. Gerätebehälter (1) nach dem vorhergehenden Anspruch, wobei eines der Behälterelemente (10c, 110c) nicht mit einem anderen Behälterelement in Höhe seiner zweiten Seite (130, 1130) verbunden ist und in Höhe der zweiten Seite (130, 1130) mit einem Steuerungssystem (40) verbunden ist, das dazu ausgestaltet ist, mit der Schwingspule (20c) des Elementes gekoppelt zu werden, das nicht mit einem anderen Behälterelement in Höhe seiner zweiten Seite (130, 1130) mittels einer oder der Betätigungswelle (30c) dergestalt verbunden zu werden, dass eine Verschiebungssteuerung der Schwingspule (20c) bereitgestellt wird, die außerhalb des Behälters (1) liegt.

10. Montageverfahren eines Gerätebehälters (1) nach einem der Ansprüche 7 bis 9, umfassend die nachfolgenden Schritte:
- Bereitstellung von mindestens zwei Basisbehälterelementen (10, 110) nach einem der Ansprüche 1 bis 6,
- Verbindung der Basisbehälterelemente (10, 110) untereinander mit dem zweiten Verbindungsmittel von einem, das mit dem ersten Verbindungsmittel des anderen verbunden ist,
wobei das Verfahren darüber hinaus, zwischen dem Schritt der Bereitstellung der Basisbehälterelemente und dem Schritt der Verbindung der Basisbehälterelemente, den nachfolgenden Schritt umfasst:
- Unterdrückung an allen den Basisbehälterelementen (110) außer einem des Opferabschnittes (1121),
und wobei, während des Schrittes der Verbindung der Basisbehälterelemente (110) untereinander, für zwei aufeinanderfolgende Behälterelemente das zweite Mittel eines Basisbehälterelementes (110) mit dem ersten Verbindungsmittel eines anderen Basisbehälterelementes (110) verbunden wird, wobei es sich bei dem anderen Basisbehälterelement (110) um das Basisbehälterelement (110) handelt, dessen Opferabschnitt unterdrückt wurde.

11. Montageverfahren nach Anspruch 10, umfassend die zusätzlichen Schritte der:
- Bereitstellung einer Schwingspule (20a, 20b, 20c) pro Basisbehälterelement (10, 110),
- Installation der Schwingspulen (20a, 20b, 20c) jeweils in den Körper (115, 1115) des entsprechenden Basisbehälterelementes (10, 110),
- Bereitstellung mindestens einer Betätigungswelle (30a, 30b, 30c),
- während des Verbindungsvorgangs der Behälterelemente (10, 110), Installation von mindestens einer Betätigungswelle (30a, 30b, 30c) dergestalt, dass die Schwingspulen (20a, 20b, 20c) untereinander mechanisch gekoppelt werden,
- Bereitstellung eines Steuerungssystems (40), das zum Steuern der Betätigung der Betätigungswelle (30a, 30b, 30c) eingerichtet ist,
- Verbindung des Steuerungssystems (40) in Höhe der zweiten Seite des Basisbehälterelementes (10, 110), bei dem sein zweites freies Verbindungsmittel vorhanden ist.

## Claims

1. Basic enclosure element (10, 110) for forming an enclosure of switchgear (1) of a high-voltage circuit comprising at least two phases, said switchgear being insulated by a dielectric fluid and, said basic enclosure element (10, 110) comprising:
- a body (115, 1115) defining a chamber for containing a mobile conductor (20a, 20b, 20c) and for being filled with the dielectric fluid,
the body (115, 1115) of the enclosure element comprising:
- at least one first face (120, 1120), said first face comprising a first connection means,
- at least one second open face (130, 1130), said second face (130, 1130) comprising a second connection means in addition to the first connection means so as to allow the connection in a fluidly communicating manner of the basic enclosure element (10, 110) to a second enclosure element (10, 110) of the same type, the basic enclosure element (10, 110) being **characterised in that** the first face (1120) is closed, the first connection means defining a sacrificial portion (1121) of the first face (1120),
and **in that** the second means is adapted to allow a connection to the first means of a second basic enclosure element (110) of the same type of which the sacrificial portion (1121) of the first face (1120) has previously been eliminated.

2. Basic enclosure element (10, 110) of claim 1 or 2, wherein the second face (130, 1130) comprises a tubular extension (132, 1132) forming a passage for a control shaft (30a, 30b, 30c) of the mobile conductor (20a, 20b, 20c), a first end of the tubular extension (132, 1132) forming the opening of the second face (130, 1130), the second end of the tubular extension (132, 1132) being in fluidic communication with the chamber.

3. Basic enclosure element (110) according to the preceding claim, wherein the second face (1130) comprises, at the level of the second end of the tubular extension (1132), a third connection means, said third connection means being shaped to enable its connection with one additional connection after removal of the tubular extension (1132).

4. Basic enclosure element (110) according to the preceding claim, wherein the third connection means is a protrusion (133, 1133) of the tubular extension (132, 1132) shaped to form a flange after removal of the tubular extension (132, 1132).

5. Basic enclosure element (10) according to claim 3, wherein the second face (130) comprises a third connection means shaped to enable its connection with an additional connection means, and wherein the tubular extension (132, 132a, 132b, 132c) is a part added to the rest of the body (115) comprising at the level of its second end a fourth additional connection means to the third connection means.

6. Basic enclosure element (10, 110) according to any one of the preceding claims, wherein the first connection means is a first annular flange (122, 1122), the second connection means being a second flange (131, 1131) in addition to the first flange (122, 1122) so as to allow the connection and fluidic communication of the basic enclosure element (10, 110) with a second basic enclosure element (10, 110) of the same type.

7. Switchgear enclosure (1) of a high-voltage circuit comprising at least two phases, said switchgear being insulated by a dielectric fluid, said switchgear enclosure (1) comprising at least two consecutive basic enclosure elements, said enclosure being **characterised in that** each of the two consecutive basic enclosure elements is a basic enclosure element (10, 110) according to any one of claims 1 to 6, one of the consecutive basic enclosure elements (10, 110) having its first connection means connected to the second connection means of the other basic enclosure element (10, 110) among the two consecutive enclosure elements, the other basic enclosure element (10, 110) having its sacrificial portion previously eliminated so as to open its first face in such a way that two consecutive enclosure elements are connected in fluidic communication.

8. Switchgear enclosure (1) according to claim 7 comprising one mobile conductor (20a, 20b, 20c) per enclosure element housed in the chamber of this same enclosure element, the mobile conductors (20a, 20b, 20c) of two consecutive enclosure elements being linked mechanically one to the other by a control shaft (30a, 30b, 30c) passing through the opening at the level of the connection between said two consecutive enclosure elements.

9. Switchgear enclosure (1) according to the preceding claim, wherein one of the enclosure elements (10c, 110c) is not connected to another enclosure element at the level of its second face (130, 1130) and is connected at the level of the second face (130, 1130) to a control system (40) configured to be linked to the mobile conductor (20c) of the element not connected to another enclosure element at the level of its second face (130, 1130) to the means of one or of the control shaft (30c) so as to supply a movement command of said mobile conductor (20c) which is outside the enclosure (1).

10. Method of mounting a switchgear enclosure (1) according to any one of claims 7 to 9, comprising the following steps:
- supplying at least two basic enclosure elements (10, 110) according to any one of claims 1 to 6,
- connecting the basic enclosure elements base (10, 110) one to another with the second connection means of the one connected with the first connection means of the other,
said method further comprising, between the step of supplying the basic enclosure elements and the step of connecting the basic enclosure elements, the following step:
- eliminating on all the basic enclosure elements (110), except one, the sacrificial portion (1121),
and wherein, during the step of connecting the basic enclosure elements (110) one to another, for two consecutive enclosure elements, the second means of a basic enclosure element (110) being connected with the first connection means of another basic enclosure element (110), the other basic enclosure element (110) being a basic enclosure element (110) of which the sacrificial portion has been eliminated.

11. Method of mounting according to claim 10, comprising the additional steps of:
- supplying one mobile conductor (20a, 20b, 20c) per basic enclosure element (10, 110),
- installing said mobile conductors (20a, 20b, 20c) each in the body (115, 1115) of the corresponding basic enclosure element (10, 110),
- supplying at least one control shaft (30a, 30b, 30c).
- during the operation of connecting the enclosure elements (10, 110), installation of at least one control shaft (30a, 30b, 30c) so as to mechanically link the mobile conductors (20a, 20b, 20c) together,
- supply of a control system (40) suitable for controlling the movement of the control shaft (30a, 30b, 30c),
- connection of the control system (40) at the level of the second face of the basic enclosure element (10, 110) which has its second means of connection free.
